# EUROPÄISCHE PATENTSCHRIFT

(11) **EP 1 525 723 B1**
(45) Veröffentlichungstag und Bekanntmachung des Hinweises auf die Patenterteilung: **28.06.2017**
(21) Anmeldenummer: 03787655.4
(22) Anmeldetag: 11.07.2003
(51) Int. Cl.: H04L 12/28, H04L 12/801, H04L 12/857, H04L 12/851, H04L 12/841, H04L 12/46, H04L 12/70

(54) **VERFAHREN, KOMMUNIKATIONSANORDNUNG UND KOMMUNIKATIONSEINRICHTUNG ZUM ÜBERMITTELN VON DATENZELLEN ÜBER EIN PAKETORIENTIERTES KOMMUNIKATIONSNETZ**
METHOD, COMMUNICATION ARRANGEMENT AND COMMUNICATION DEVICE FOR TRANSMITTING MESSAGE CELLS VIA A PACKET-ORIENTED COMMUNICATION NETWORK
PROCÉDÉ, ENSEMBLE DE COMMUNICATION ET DISPOSITIF DE COMMUNICATION PERMETTANT DE TRANSMETTRE DES CELLULES DE DONNÉES PAR L'INTERMÉDIAIRE D'UN RÉSEAU DE COMMUNICATION ORIENTÉ PAQUETS

(30) Priorität: 25.07.2002 DE 10233954
(43) Veröffentlichungstag der Anmeldung: 27.04.2005
(73) Patentinhaber: ADTRAN GmbH, 10557 Berlin (DE)
(72) Erfinder: ROGASCH, Volker, 17493 Greifswald (DE); SCHALK, Rüdiger, 18516 Süderholz (DE)
(74) Vertreter: Brachmann, Roland W.
(86) Internationale Anmeldenummer: PCT/DE2003/002354
(87) Internationale Veröffentlichungsnummer: WO 2004/017572

(56) Entgegenhaltungen:
- WO-A-99/16213
- DE-A- 10 050 608
- MAMMERI Z ET AL: "Connection allocation schemes for guaranteeing hard real-time communications with ATM network" FACTORY COMMUNICATION SYSTEMS, 1997. PROCEEDINGS. 1997 IEEE INTERNATIONAL WORKSHOP ON BARCELONA, SPAIN 1-3 OCT. 1997, NEW YORK, NY, USA,IEEE, US, 1. Oktober 1997 (1997-10-01), Seiten 203-212, XP010255544 ISBN: 0-7803-4182-1
- "Frame-based ATM Transport over Ethernet (FATE) - AF-FBATM-0139.00" ATM FORUM TECHNICAL COMMITTEE, XX, XX, Februar 2000 (2000-02), Seiten 1-11, XP002260617
- LAWRENCE G. ROBERTS: "Request for Coordination of Cells In Frames Specifications" INTERNET ARTICLE, [Online] 19. August 1996 (1996-08-19), Seiten 1-45, XP002267451 Baltimore Gefunden im Internet: <URL:http://www.ziplink.net/~lroberts/Atmf -961104.html> [gefunden am 2004-01-20]
- SHARA EVANS: "Standards watch: 802.1p - A start at Ethernet prioritisation" INTERNET ARTICLE, [Online] September 1998 (1998-09), Seiten 1-3, XP002267452 Gefunden im Internet: <URL:http://www.telsyte.com.au/standardswa tch/802.1p.htm> [gefunden am 2004-01-20]

## Beschreibung

Im Rahmen der Optimierung von aktuellen Kommunikationsnetzen, insbesondere von breitbandigen Teilnehmerzugangsnetzen - auch als Access-Networks bezeichnet - soll einer großen Anzahl von Teilnehmern kostengünstig der Zugang zu Breitband-Diensten - z.B. Video-On-Demand - sichergestellt werden. Eine Möglichkeit der Optimierung besteht darin, die durch die Teilnehmerzugangsnetze bereitgestellten Einrichtungen und Ressourcen (z.B. Bandbreite und Verarbeitungsgeschwindigkeit) auf möglichst viele Teilnehmeranschlüsse zu verteilen. Eine weitere Möglichkeit der Kostenoptimierung besteht darin, die für aktuelle Datendienste erforderlichen, intelligenten Funktionen weitgehend zentral im Teilnehmerzugangsnetz anzuordnen, so dass beispielsweise die im Kommunikationsnetz bzw. in den jeweiligen Netzeinrichtungen angeordneten Teilnehmeranschlussbaugruppen bzw. zentralen Baugruppen mit möglichst wenig Funktionalität ausgestaltet werden müssen.

Des weiteren kann der technologische und wirtschaftliche Aufwand zur Realisierung von in aktuellen Kommunikationsnetzen anordenbaren Netzeinrichtungen durch den Einsatz von nicht speziell für breitbandige Teilnehmerzugangsnetze sondern für Massenmärkte entwickelte Technologien (z.B. Personalcomputer) reduziert werden. Als Beispiel für eine solch weitverbreitete und entsprechend weiterentwickelte Technologie sei das gemäß dem Standard IEEE 802.3 standardisierte "Ethernet" erwähnt, welches ein rahmen- bzw. ein paketorientiertes und verbindungsloses Übertragungsverfahren bereitstellt. Ethernetbasierte Übertragungssysteme werden vor allem in lokalen Kommunikationsnetzen eingesetzt. Bei in aktuellen Kommunikationsnetzen anordenbaren Netzeinrichtungen wie beispielsweise Multiplexereinrichtungen (z.B. DSLAM, Digital Subscriber Line Access Multiplexer) ist beispielsweise bekannt, gemäß dem asynchronen Transfermodus - ATM - ausgestaltete Datenzellen - auch als ATM-Zellen bezeichnet - über ein lokal in der Netzeinrichtung angeordnetes Ethernet zwischen in der Netzeinrichtung angeordneten Teilnehmeranschlussbaugruppen und zumindest einer die zentralen Funktionen der Netzeinrichtung aufweisenden, zentralen Einheit bzw. Baugruppe zu vermitteln. Das Ethernet kann sowohl als "Verdrahtung" bzw. "Backplane" in einem Baugruppenträger zur Überbrückung kleinerer Entfernungen innerhalb der Netzeinrichtung als auch als flächendeckendes Kommunikationsnetz zur Überbrückung größerer Entfernungen eingesetzt werden.
Ziel zukünftiger Kommunikationsnetze ist es, immer größere Datenvolumen mit hohen Datenübertragungsraten von und in Richtung Endteilnehmer zu übermitteln, wobei dies insbesondere durch den Einsatz Ethernet-basierter Übertragungsverfahren erreicht werden soll. Um einen Übergang von mit hohem technischen und somit wirtschaftlichen Aufwand zu realisierenden ATM-basierten Übertragungssystemen zu kostengünstigen Ethernet-basierenden Systemen zu erreichen, ist es insbesondere notwendig, ATM-Service über Systemschnittstellen zu führen, die in aktuellen Kommunikationsnetzen bereits auf Ethernet-Übertragungstechnologien basieren. Dabei müssen insbesondere die "Quality-Of-Service Eigenschaften" der ATM-Übertragungstechnologie erhalten bleiben, wobei eine zufriedenstellende Auslastung der vorhandenen Übertragungskapazität aktueller Kommunikationsnetze erreicht werden soll. Patentschrift WO 99/16213 A2 beschreibt ein Verfahren zum Übermitteln von Datenzellen über ein paketorientiertes Kommunikationsnetz IEEE 1394. Um den IEEE 1394 Bus effizient zu nutzen, werden einerseits Echtzeitdienste durch Datenpakete mit gleichmäßigen Zeitabständen ("isochronous packets") und andererseits Nicht-Echtzeitdienste mittels asynchroner Datenpakete übertragen, wobei Echtzeitdienste die höhere Priorität erhalten.

In der Druckschrift "ATM Forum, Technical Committee, Framebased ATM Transport over Ethernet (FATE), AF-FBATM-0139.00, February 2000" ist beispielsweise ein Verfahren beschrieben, durch welches ATM-Zellen über ein als Ethernet ausgestaltetes Kommunikationsnetz übertragen werden. Nachteilig ist das beschriebene Verfahren auf ATM-Verbindung vom Typ AAL5 beschränkt. Somit ist dieses Verfahren nur bedingt in aktuellen und zukünftigen Teilnehmerzugangsnetzen einsetzbar, da in diesem bei der Realisierung von aktuellen Daten- und Kommunikationsdiensten ATM-Zellen aller AAL-Typen übertragen werden, insbesondere vom Typ AAL1 und AAL2. Als weiterer Nachteil dieses Verfahrens werden lediglich die Nutzinformationen der jeweils über das Ethernet zu übermittelnden ATM-Zellen - d.h. Transport von AAL5 SSCS-PDUs - in das jeweilige Nutzdatenfeld des Ethernetrahmens eingefügt, was eine mit technischem Aufwand verbundene Vorverarbeitung der zu übermittelnden ATM-Zellen erforderlich macht. Dieser Lösungsansatz ist in aktuellen Teilnehmerzugangsnetzen nicht einsetzbar, da der AAL5-Abschluss beim Teilnehmer - d.h. beim CPE, Customer Premises Equipment - erfolgt und das Übertragungssystem für die Übermittlung von AAL5-Informationen transparent sein soll. Mit dem bekannten Verfahren ist eine transparente Übertragung der ATM-Zellen über das Ethernet nicht möglich.

Des weiteren wird bei dem bekannten Verfahren nachteilig für jede innerhalb des ATM-Kommunikationsnetzes eingerichtete virtuelle Verbindung - PVC, Permanent Virtuell Connection - ein eigener Ethernet-Rahmen (Frame) benutzt. In Abhängigkeit von der Frame-Länge tritt für einzelne ATM-Zellen eine Verzögerung (Delay) auf, da eintreffende Zellen solange zwischengespeichert werden müssen, bis der jeweilige Ethernet-Rahmen bzw. Ethernet-Frame gefüllt ist. Dies ist insbesondere für Echtzeit-Anwendungen ungünstig. Eine naheliegende Alternative, in jeden Ethernet-Rahmen nur eine einzige ATM-Zelle einzufügen, hat jedoch eine schlechte Auslastung der durch das Kommunikationsnetz bereitgestellten Übertragungsressourcen zur Folge.

Der Erfindung liegt somit die Aufgabe zugrunde, die Übermittlung von ATM-Zellen über ein paket- bzw. rahmenorientiertes Kommunikationsnetz zu verbessern. Insbesondere soll ein Teilnehmerzugangsnetz geschaffen werden, bei dem unterschiedliche AAL-Typen aufweisende und zu zum Teil unterschiedlichen ATM-Verbindungen zugehörige ATM-Zellen transparent unter Einhaltung der Quality-Of-Service-Eigenschaften mittels der paket- oder rahmenorientierten Übertragungstechnologie, insbesondere mittels Ethernet-Übertragungstechnologie übermittelt werden. Die Aufgabe wird ausgehend von einem Verfahren gemäß dem Oberbegriff des Patentanspruches 1 durch dessen kennzeichnende Merkmale gelöst. Des weiteren wird die Aufgabe ausgehend von einer Kommunikationsanordnung sowie von einer Kommunikationseinrichtung gemäß dem Oberbegriff der Patentansprüche 15 und 18 durch die jeweils kennzeichnenden Merkmale gelöst.

Beim erfindungsgemäßen Verfahren werden in einem ersten Kommunikationsnetz zu übertragende Datenzellen zumindest teilweise über ein zweites paketorientiertes Kommunikationsnetz übermittelt. Im ersten Kommunikationsnetz sind mehrere den zu übermittelnden Datenzellen jeweils zuordenbare Prioritäten vorgesehen, wobei die Datenzellen in Abhängigkeit von den jeweils zugeordneten Prioritäten über das erste Kommunikationsnetz übermittelt werden. Der wesentliche Aspekt des erfindungsgemäßen Verfahrens besteht darin, dass zumindest eine der zu übermittelnden und die gleiche zugeordnete Priorität aufweisenden Datenzellen in ein Nutzdatenfeld zumindest eines Datenpaketes des zweiten paketorientierten Kommunikationsnetzes eingefügt wird. Dem zumindest einem Datenpaket wird eine von der Priorität der zumindest einen eingefügten Datenzelle abgeleitete Übertragungspriorität zugeordnet, wobei das zumindest eine Datenpaket zusammen mit der zumindest einen eingefügten Datenzelle in Abhängigkeit von der zugeordneten Übertragungspriorität zumindest teilweise an/über das zweite paketorientierte Kommunikationsnetz übermittelt wird.

Der wesentliche Vorteil des erfindungsgemäßen Verfahrens besteht darin, dass die eingangs genannten Nachteile des aus dem FATE-Standard hervorgehenden Verfahrens vermieden werden. Im Gegensatz zu dem im Standard beschriebenen Verfahren werden die zu übermittelten Informationen transparent über das paketorientierte Kommunikationsnetz übertragen, so dass der technische und wirtschaftliche Aufwand für eine Vorverarbeitung der zu übermittelnden Informationen eingespart werden kann. Insbesondere wird durch das erfindungsgemäße Verfahren die für Teilnehmerzugangsnetzen spezifische, sternförmige Verbindungsstruktur optimal genutzt, bei der mehrere Teilnehmer über das Teilnehmerzugangsnetz bzw. Access-Network mit einem Netzeintrittspunkt eines übergeordneten Kommunikationsnetzes verbunden sind. Vorteilhaft können die gleiche Priorität bzw. Servicekategorie aufweisende und zu unterschiedlichen virtuellen Verbindungen gehörende Datenzellen in einen Daten- bzw. Übertragungsrahmen des paketorientierten Kommunikationsnetzes eingefügt werden. Somit wird ein verbessertes Befüllen der einzelnen Datenpakete bzw. Übertragungsrahmen innerhalb von vorgegebenen Zeitbeschränkungen (Time Outs), also unter Einhaltung von vorgegebenen Prioritäten bzw. Echtzeitanforderungen erreicht, so dass eine optimale Ausnützung der durch Teilnehmerzugangsnetze bereitgestellten Übertragungsressourcen erreicht wird. Des weiteren ist das erfindungsgemäße Verfahren nicht auf einen bestimmten Verbindungs-Typ wie beispielsweise auf ATM-Verbindungen vom Typ AAL5 beschränkt.

Vorteilhaft sind im ersten und/oder zweiten Kommunikationsnetz Einfügungsfunktionen vorgesehen, durch welche für jede im ersten Kommunikationsnetz vorgesehene Priorität jeweils
- das zumindest eine die entsprechend abgeleitete Übertragungspriorität aufweisende Datenpaket gebildet,
- die zumindest eine die entsprechende Priorität aufweisende Datenzelle in das Nutzdatenfeld des zumindest einen gebildeten Datenpaketes eingefügt,
- das zumindest eine Datenpaket zumindest teilweise an/über das zweite Kommunikationsnetz übermittelt wird - Anspruch 2.
Durch diese vorteilhafte Weiterbildung wird für die erfindungsgemäße Datenüberragung eine der Anzahl der im ersten Kommunikationsnetz vorgesehenen Prioritäten entsprechende Anzahl von Übertragungs-Instanzen - beispielsweise Ethernet-Instanzen - mit unterschiedlicher Priorisierung zur Realisierung des erfindungsgemäßen Verfahrens bereitgestellt.

Vorteilhaft werden die über das erste Kommunikationsnetz zu übertragenden Datenzellen im Rahmen von über das erste Kommunikationsnetz eingerichteten, virtuellen Verbindungen übermittelt, wobei die jeweils zugeordnete Priorität der jeweils über eine der virtuellen Verbindungen übermittelten Datenzellen eine verbindungsindividuelle Priorität repräsentiert - Anspruch 3. Durch diese vorteilhafte Ausgestaltung werden Datenzellen (beispielsweise ATM-Zellen), welche unterschiedlichen virtuellen Verbindungen zugeordnet sind, d.h. welche unterschiedliche VPI/VCI-Werte aufweisen, jedoch die gleiche Priorität aufweisen bzw. der gleichen Servicekategorie zugeordnet sind, gemeinsam in ein Datenpaket des paketorientierten Kommunikationsnetzes eingefügt. Somit wird eine optimale Ausnutzung der durch das paketorientierte Kommunikationsnetz bereitgestellten Übertragungsressourcen erreicht.

Gemäß einer weiteren vorteilhaften Ausgestaltung des erfindungsgemäßen Verfahrens sind den jeweils über eine der virtuellen Verbindungen des ersten Kommunikationsnetzes übermittelten Datenzellen neben der verbindungsindividuellen Priorität zumindest ein weiterer verbindungsindividueller Übertragungsparameter zugeordnet - Anspruch 4.

Vorteilhaft sind die Einfügungsfunktionen derart ausgestaltet, dass das Einfügen der zumindest einen zu übermittelten und die gleiche zugeordnete Priorität aufweisenden Datenzelle in das Nutzdatenfeld des jeweiligen zumindest einen Datenpaketes und das Weitervermitteln des zumindest einen Datenpaketes zumindest teilweise an/über das paketorientierte Kommunikationsnetz in Abhängigkeit von dem jeweils zugeordneten verbindungsindividuellen Übertragungsparameter der jeweils zumindest eine in das Nutzdatenfeld eingefügten Datenzelle erfolgt - Anspruch 5. Durch diese vorteilhafte Ausgestaltung wird insbesondere die Einhaltung von durch bestimmte Übertragungsverfahren bereitgestellte Quality-Of-Service Eigenschaften gewährleistet. Im Rahmen dieser Weiterbildung werden durch die jeweils unterschiedliche Prioritäten aufweisenden Einfügungs-Instanzen die jeweils gebildeten Datenpakete bzw. Frames jeweils dann abgesendet, wenn eine der folgenden Bedingungen erfüllt ist:
- Der Payloadanteil des jeweils gebildeten Datenpaketes bzw. Frames ist gefüllt, oder
- eine vorgegebene Verweilzeit der in das Nutzdatenfeld des Datenpaketes zumindest einen eingefügten Datenzelle wird beim Befüllen des Nutzdatenfeldes überschritten.

Somit wird ein Überschreiten von vorgegebenen Verzögerungszeiten bzw. Delays, unabhängig vom jeweiligen Datenverkehrsaufkommen, vermieden.

Gemäß einer weiteren Weiterbildung des erfindungsgemäßen Verfahrens ist das erste Kommunikationsnetz gemäß dem asynchronen Transfermodus - ATM - ausgestaltet - Anspruch 6 -, sowie das paketorientierte Kommunikationsnetz und die darin übermittelten Datenpakete gemäß dem IEEE-Standard 802.3 ausgestaltet - Anspruch 9.

Vorteilhaft sind die Einfügungsfunktionen derart ausgestaltet, daß das Einfügen der zumindest einen zu übermittelnden und die gleiche zugeordnete Priorität aufweisenden Datenzelle in das Nutzdatenfeld des jeweiligen zumindest einen Datenpaketes und das Weitervermitteln des zumindest einen Datenpaketes zumindest teilweise an/über das paketorientierte Kommunikationsnetz in Abhängigkeit von dem kleinsten festgelegten "Cell Delay Variation Tolerance"-Wert der jeweils zumindest einen in das Nutzdatenfeld eingefügten Datenzelle erfolgt - Anspruch 8. Durch diese vorteilhafte Weiterbildung des erfindungsgemäßen Verfahrens wird die Zeit für das Befüllen eines Datenpaketes überwacht, so daß sichergestellt ist, daß die zu übermittelnden Datenzellen nicht unzulässig verzögert werden und das aktuell gebildete Datenpaket rechtzeitig abgesendet bzw. weitervermittelt wird.

Vorteilhaft sind die über das zweite paketorientierte Kommunikationsnetz übermittelten Datenpakete zusätzlich gemäß dem Standard IEEE 802.1Q-1998 ausgestaltet, wobei die jeweils einem über das zweite Kommunikationsnetz übermittelten Datenpaket zugeordnete Übertragungspriorität durch die "user_priority"-Information im "Tag Control Information"-Datenfeld (TCI) des "Ethernet-encoded tag header" bestimmt ist - Anspruch 10. Durch diese vorteilhafte Weiterbildung wird unter Ausnutzung des IEEE-Standard 802.1Q-1988 auf besonders einfache Weise eine direkte Zuordnung von ATM-Service-Klassen zu "Ethernet User Priorities" ermöglicht.

Weitere vorteilhafte Ausgestaltungen des erfindungsgemäßen Verfahrens sowie eine Kommunikationsanordnung sowie eine Kommunikationseinrichtung sind den weiteren Ansprüchen zu entnehmen.

Im folgenden wird das erfindungsgemäße Verfahren anhand mehrerer Zeichnungen näher erläutert.

Dabei zeigen:
- FIG 1: ein in einem Teilnehmerzugangsnetz angeordnetes Anwendungsszenario, bei welchem das erfindungsgemäße Verfahren zum Einsatz kommt,
- FIG 2: eine in einer Multiplexereinrichtung (DSLAM) angeordnete Anschlusseinheit zur Realisierung des erfindungsgemäßen Verfahrens,
- FIG 3: den Aufbau einer in einer Anschlusseinheit oder in einer zentralen Einheit angeordneten Steuereinheit zur Durchführung des erfindungsgemäßen Verfahrens,
- FIG 4: in einem funktionalen Blockschaltbild die ATMspezifische Verarbeitung der im Rahmen des erfindungsgemäßen Verfahrens zu übermittelnden Informationen bzw. ATM-Zellen,
- FIG 5: in einem funktionalen Blockschaltbild die Ethernetspezifische Verarbeitung von im Rahmen des erfindungsgemäßen Verfahrens zu übermittelnden Informationen bzw. ATM-Zellen,
- FIG 6: eine gemäß dem erfindungsgemäßen Verfahren und im Rahmen des IEEE-Standard 802.1Q-1988 gebildeter Ethernet-Rahmen mit in das Nutzdatenfeld eingefügten ATM-Zellen und zugeordneter bzw. "gemappter" ATM-Service-Klasse bzw. Übertragungspriorität.

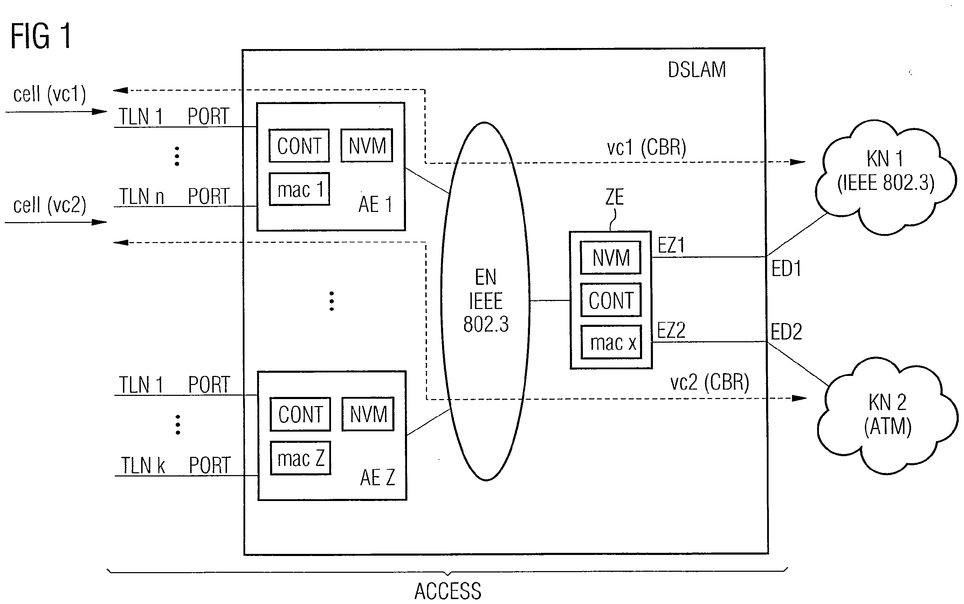

FIG 1 zeigt in einem Blockschaltbild eine in einem gemäß dem asynchronen Transfermodus - ATM - ausgestalteten Teilnehmeranschlussnetz bzw. Access-Network ACCESS angeordnete Kommunikationseinrichtung bzw. Multiplexeinrichtung DSLAM, an welche über mehrere Anschlusseinheiten AE1...Z und über mehrere Teilnehmeranschlussleitungen TLN1...n bzw. TLN1...k die jeweiligen Teilnehmer - bzw. CPE, nicht dargestellt - angeschlossen sind. In diesem Ausführungsbeispiel sind die jeweiligen Teilnehmer beispielsweise über ein xDSL-Übertragungsverfahren an entsprechend dafür vorgesehene Anschlüsse PORT der jeweiligen Anschlusseinheiten AE1...z angeschlossen. In der Kommunikationseinrichtung DSLAM ist ein gemäß dem IEEE-Standard 802.3 ausgestaltetes, paketorientiertes Kommunikationsnetz EN - im folgenden auch als "Ethernet" bezeichnet - angeordnet, an welches die jeweiligen Anschlusseinheiten AE1...z angeschossen sind. Mit dem Ethernet EN ist eine weitere zentral in der Kommunikationseinrichtung DSLAM angeordnete zentrale Einheit ZE verbunden. Sowohl den Anschlusseinheiten AE1...z als auch der zentralen Einheit ZE ist jeweils eine diese eindeutig innerhalb des Ethernet EN identifizierende Ethernet-MAC-Adresse mac1...x...z (MAC, Medium Access Control) zugeordnet.

Die zentrale Einheit ZE ist über einen ersten Eingang EZ1 mit einem ersten Eingang ED1 der Kommunikationseinrichtung DSLAM verbunden. An diesen ersten Eingang ED1 ist ein erstes übergeordnetes, beispielsweise ebenfalls gemäß dem IEEE-Standard 802.3 ausgestaltetes Kommunikationsnetz KN1 angeschlossen. Das erste übergeordnete Kommunikationsnetz KN1 kann beispielsweise auch als Gigabit-Ethernet ausgestaltet sein, welches beispielsweise über einen 1000 BASE-LX Anschluss an den ersten Eingang ED1 der Kommunikationseinrichtung DSLAM angeschlossen ist.

Die in der Kommunikationseinrichtung DSLAM angeordnete zentrale Einheit ZE weist einen zweiten Eingang EZ2 auf, welcher mit einem zweiten in der Kommunikationseinrichtung DSLAM vorgesehenen Eingang ED2 verbunden-ist. An diesem zweiten Eingang ED2 ist gemäß dem Anwendungsszenario ein weiteres übergeordnetes, gemäß dem asynchronen Transfermodus ATM ausgestaltetes Kommunikationsnetz KN2 angeschlossen.

Die an die Kommunikationseinrichtung DSLAM angeschlossenen Teilnehmer sind über die jeweiligen Anschlusseinheiten AE1..;z, über das Ethernet EN und über die zentrale Einheit ZE mit den beiden übergeordneten Kommunikationsnetzen KN1, KN2 verbunden. In den jeweiligen Anschlusseinheiten AE1...z sowie in der zentralen Einheit ZE sind jeweils Steuerungsmittel CONT zur Durchführung des erfindungsgemäßen Verfahrens vorgesehen. Den in den jeweiligen Einheiten AE1...z, ZE angeordneten Steuerungsmittel CONT sind weitere Netzwerk-Verarbeitungsmittel NVM beispielsweise zur Ausführung von Verkehrs-Management (Traffic Management) und Verarbeitung von Kopf-Information (Header Translation) zugeordnet. Zumindest die auf der zentralen Einheit ZE vorgesehenen Netzwerk-Verarbeitungsmittel NVM können zusätzliche Mittel zur Durchführung von Segmentierung und Reassemblierung (z.B. AAL5 SAR) umfassen.

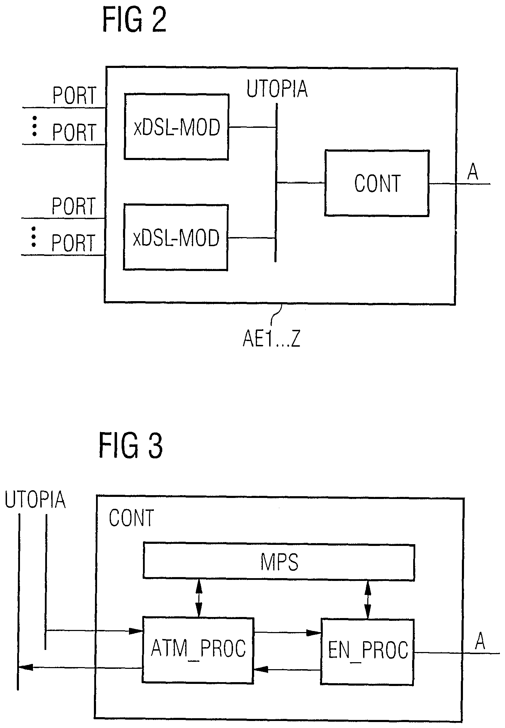

In FIG 2 ist der Aufbau einer in der Kommunikationseinrichtung DSLAM auf Seiten der Teilnehmer angeordneten Anschlusseinheit AE1...z dargestellt. In der Anschlusseinheit AE1...z sind mehrere xDSL-Modems xDSL-MOD angeordnet, an welche über einen entsprechend ausgestalteten Anschluß PORT jeweils eine gemäß dem xDSL-Übertragungsverfahren ausgestaltete Teilnehmeranschlussleitung TLN angeschlossen ist. Die einzelnen xDSL-Modems sind über eine gemäß dem ATM-Übertragungsverfahren ausgestaltete Utopia-Schnittstelle UTOPIA mit der Steuereinheit CONT verbunden. Die Steuereinheit CONT ist über eine interne Schnittstelle - beispielsweise eine xMII-Schnittstelle, Medium Independent Interface - sowie über einen Anschluss A mit dem Ethernet EN - in FIG 2 nicht dargestellt - verbunden. Die nicht näher dargestellte zentrale Einheit ZE ist in entsprechender Art und Weise ausgestaltet.

In FIG 3 ist der funktionale Aufbau der in jeder Anschlusseinheit AE1..,z bzw. zentralen Einheit ZE angeordneten Steuereinheit CONT genauer dargestellt. Die Steuereinheit CONT - auch als Converter bezeichnet - setzt sich aus einer ATMspezifischen Verarbeitungsstufe ATM_PROC und einer Ethernetspezifischen Verarbeitungsstufe EN_PROC zusammen, welche intern miteinander verbunden sind. Die ATM-Verarbeitungsstufe ATM_PROC ist mit der Utopia-Schnittstelle UTOPIA verbunden. Die Ethernet-Verarbeitungsstufe EN_PROC ist über die interne xMII-Schnittstelle mit dem Ethernet verbunden. Beide Verarbeitungsstufen ATM_PROC, EN_PROC sind über eine Microcontroller-Schnittstelle MPS an einen Micro-Controller - nicht dargestellt -, zur Durchführung von Wartungs- und Administrierungsaufgaben anschließbar.

Durch die ATM-Verarbeitungsstufe ATM_PROC werden folgende Funktionen unterstützt:
- Utopia L2-Schnittstelle
- Kopffeld-Verarbeitung (Header Translation)
- Speichermittel zur Verarbeitung von Kopffeld-Informationen (Header Translation Table)
- Verkehrs-Management zur Warteschlangensteuerung und zur Steuerung der jeweiligen Ausgänge (Queue- und Port-Scheduling)
- Warteschlangenroutinen zum Zwischenspeichern von ATM-Zellen.

Für das in FIG 1 dargestellte Ausführungsbeispiel sei angenommen, dass ausgehend von einer über die erste Teilnehmeranschlussleitung TLN1 an die erste Anschlusseinheit AE1 angeschlossenen Kommunikationseinrichtung - nicht dargestellt - Informationen bzw. ATM-Zellen über eine virtuelle Verbindung - in FIG 1 durch einen strichliierten Doppelpfeil vc1 dargestellt - über das Ethernet EN, die zentrale Einheit ZE an ein im ersten Kommunikationsnetz KN1 angeordnetes Ziel - nicht dargestellt - übermittelt werden. Des weiteren sei angenommen, dass ausgehend von einer über die n-te Teilnehmeranschlussleitung TLMn an die erste Anschlusseinheit AE1 angeschlossenen Kommunikationseinrichtung Informationen bzw. ATM-Zellen über eine zweite virtuelle Verbindung - in FIG 1 durch einen strichliierten Doppelpfeil vc2 dargestellt - über das Ethernet EN und die zentrale Einheit ZE an ein im übergeordneten zweiten Kommunikationsnetz KN2 angeordnetes Ziel - nicht dargestellt - übermittelt werden. Des weiteren sei angenommen, daß die über die beiden virtuellen Verbindungen vc1,2 übermittelten ATM-Zellen cell(vc1), cell(vc2) jeweils der ATM-Service-Klasse CBR zugeordnet sind.

Im folgenden wird das erfindungsgemäße Verfahren genauer erläutert:
Im Gegensatz zu dem eingangs zitierten Frame-Based-ATM-Over-Ethernet Standard (FATE) des ATM-Forums wird erfindungsgemäß mindestens eine komplette, d.h. zumindest eine eine ein Ziel- und Nutzdatenfeld aufweisende ATM-Zelle mit 53 Byte Datenumfang übertragen, welche zu unterschiedlichen virtuellen Verbindungen zugeordnet sein können - hier vc1 und vc2. Des weiteren ist das erfindungsgemäße Verfahren nicht auf den Verbindungstyp AAL 5 beschränkt. Erfindungsgemäß werden die an der Kommunikationseinrichtung DSLAM bzw. an den Anschlusseinheiten AE1...z bzw. an der zentralen Einheit ZE eintreffenden und entsprechend weiter zu vermittelnden ATM-Zellen durch entsprechend vorgesehene Steuerungs- bzw. Einfügungsmittel CONT in das Nutzdatenfeld nf bzw. Payloadfeld eines Ethernet-Rahmens dp des innerhalb der Kommunikationseinrichtung DSLAM angeordneten Ethernet EN eingefügt. Ein Ethernet-Rahmen dp kann 1 bis n Daten bzw. ATM-Zellen enthalten, wobei die Anzahl n der eingefügten ATM-Zellen nur durch die gemäß dem Standard maximal mögliche Länge eines Ethernet-Rahmens beschränkt ist. Standardgemäß ist die normale Länge eines Ethernet-Rahmen auf 1536 Bytes festgelegt. Diese Länge kann jedoch bei bestimmten Anwendungen verlängert werden.

Wie aus FIG 2 und FIG 3 ersichtlich, werden die von den Teilnehmern über die jeweiligen Teilnehmeranschlussleitungen TLN1,n und über das jeweilige xDSL-Modem xDSL-MOD an die erste Anschlusseinheit AE1 übermittelten ATM-Zellen cell(vc1), cell(vc2) über die Utopia-Schnittstelle UTOPIA an die in der Anschlusseinheit AE1 angeordnete Steuereinheit CONT übermittelt. Gemäß FIG 3 werden die an der Steuereinheit CONT eintreffenden ATM-Zellen cell(vc1), cell(vc2) zuerst an die ATM-Verarbeitungseinheit ATM_PROC weitergeleitet.

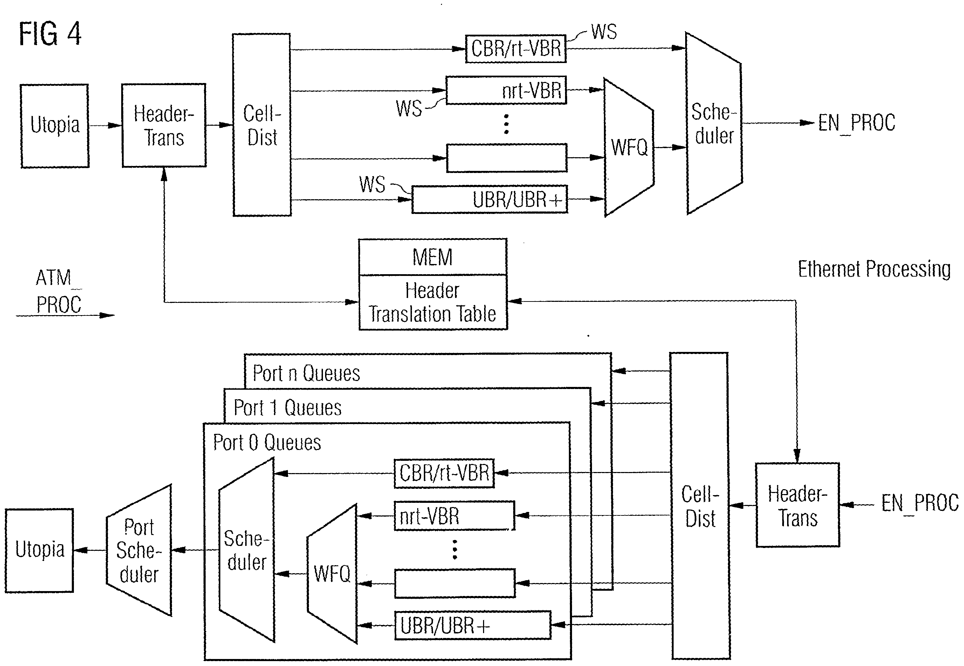

In FIG 4 ist der funktionale Aufbau dieser ATM-Verarbeitungseinheit ATM_PROC genauer dargestellt. Die von der Utopia-Schnittstelle empfangenen ATM-Zellen cell(vc1), cell(vc2) werden zunächst durch die Kopffeld-Verarbeitungseinheit Header-Trans entsprechend der im Speicher MEM gespeicherten "Header Translation Table"-Informationen übersetzt, d.h. die im Kopffeld der jeweiligen ATM-Zellen enthaltenen VPI-/VCI-Werte (Virtual Path Identifier, Virtual Channel Identifier) werden entsprechend modifiziert. Dies ist notwendig, da implementierungsbedingt in Teilnehmerzugangsnetzen die jeweiligen ATM-Zellen gewöhnlich mit den gleichen VPI-/VCI-Werten von der Teilnehmerseite aus abgesendet werden und somit normalerweise keine Unterscheidungsmöglichkeiten zwischen den einzelnen eingerichteten virtuellen Verbindungen bzw. PVCs (Permanent Virtual Connections) gegeben sind. Nach der Übersetzung werden die einzelnen ATM-Zellen cell(vc1), cell(vc2) durch Zell-Verteilungsmittel Cell-Dist entsprechend ihrer zugehörigen ATM-Service-Klasse in bekannter Weise zu den entsprechend angeordneten Warteschlangen bzw. Queues weitergeleitet. Durch die ATM-Verarbeitungseinheit ATM_PROC werden beispielsweise folgende ATM-Service-Klassen unterstützt:
CBR (Constant Bit Rate)
   rt-VBR (real time Variable Bit Rate)
   nrt-VBR (non real time Variable Bit Rate)
   UBR (Unspecified Bit Rate)
   UBR+

Wie aus FIG 4 ersichtlich, ist für jede der unterstützten ATM-Service-Klassen eine geeignete Warteschlange WS vorgesehen, in welche die jeweils eintreffenden ATM-Zellen durch die Zell-Verteilungsmittel Cell-Dist verteilt und gespeichert werden. Den einzelnen Warteschlangen WS sind jeweils Warteschlangen-Auslesemittel WFQ, Scheduler zugeordnet, durch welche die in den einzelnen Warteschlangen WS angeordneten ATM-Zellen entsprechend ihrer jeweiligen Priorität bzw. ATM-Service-Klasse ausgelesen und an die Ethernet-Verarbeitungseinheit EN_PROC weitergeleitet werden. Die Auslesemittel WFQ, Scheduler unterstützen "Strict Priority Scheduling", so dass die ATM-Zellen mit der höchsten Priorität zuerst ausgelesen und gesendet werden. Es sei angemerkt, dass die an der ATM-Verarbeitungseinheit ATM_PROC eintreffenden ATM-Zellen und in Richtung Teilnehmer weiterzuvermittelnden ATM-Zellen in entsprechender Art und Weise in jeweils dafür vorgesehen Warteschlangen aufgeteilt, ausgelesen und über die Utopia-Schnittstelle UTOPIA weitervermittelt werden - in FIG 4 in der unteren Hälfte verdeutlicht.

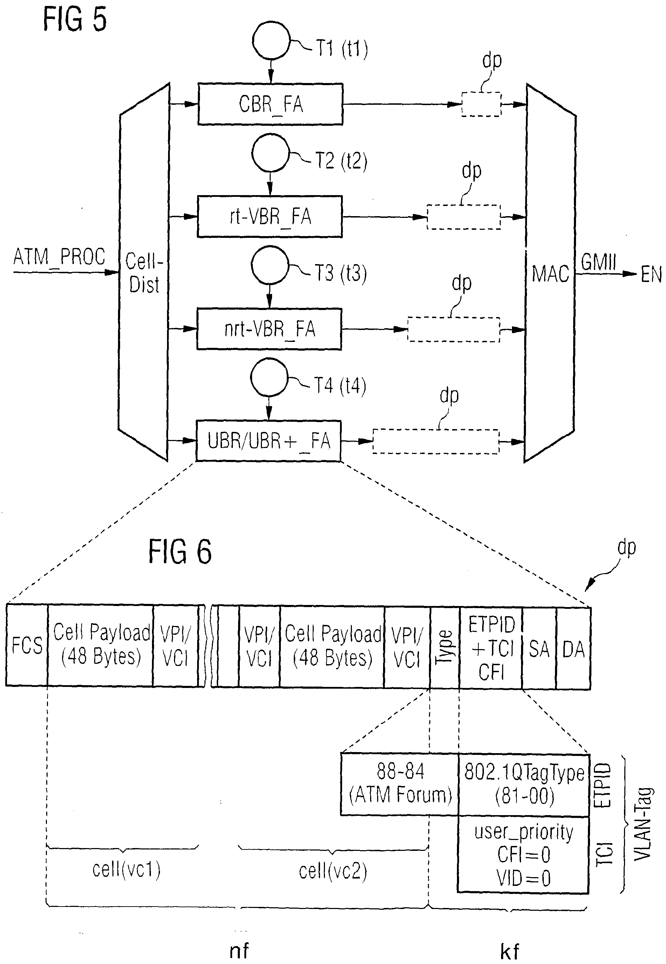

In FIG 5 ist der funktionelle Aufbau der Ethernet-Verarbeitungseinheit EN_RPOC dargestellt. Für jede im ATM-Teilnehmerzugangsnetz ACCESS vorgesehene ATM-Service-Klasse sind jeweils Mittel zur Bildung von Ethernet-Datenrahmen vorgesehen - im folgendem als "Frame-Assembly-Instanzen" CBR_FA, rt_VBR_FA, nrt_VBR_FA, UBR/UBR+_FA bezeichnet -, durch welche die jeweiligen ATM-Zellen cell(vc1), cell(vc2) in die jeweils gebildeten Ethernet-Rahmen eingefügt bzw. "gemappt" werden. Es können mehrere ATM-Zellen mit unterschiedlichen VPI/VCI-Werten jeweils in einen Ethernet-Rahmen gemappt werden. Erfindungsgemäß werden jedoch immer nur ATM-Zellen einer Service-Klasse in den selben Ethernet-Rahmen dp eingefügt. Bei dem in FIG 1 dargestellten Anwendungsszenario werden die über die beiden eingerichteten virtuellen Verbindungen vc1, 2 übermittelten und jeweils die ATM-Service-Klasse "Constant Bit Rate, CBR" aufweisenden ATM-Zellen cell(vc1), cell(vc2) durch die Zell-Verteilungsmittel Cell-Dist an die entsprechend dafür vorgesehene Frame-Assembly-Instanz CBR_FA weitervermittelt. Je nach von der ATM-Verarbeitungseinheit ATM_PROC übermittelter Reihenfolge werden die ATM-Zellen beider virtueller Verbindungen cell(vc1), cell(vc2) durch die Frame-Assembly-Instanz CBR_FA in einen Ethernet-Datenrahmen dp eingefügt - siehe FIG 6.

Wie aus FIG 6 ersichtlich, ist der Ethernet-Datenrahmen dp gemäß dem IEEE-Standard 802.1Q-1998 ausgestaltet. Dieser Ethernet-Datenrahmen dp enthält ein modifiziertes Kopffeld kf - in FIG 6 als "VLAN-Tag" bezeichnet - mit einer bestimmten "user_priority" im "Tag Control Information Feld" (TCI). Erfindungsgemäß wird eine der Priorität der jeweils in das Nutzdatenfeld nf des jeweiligen Ethernet-Datenrahmens dp eingefügten ATM-Zellen entsprechende Übertragungs-Priorität in das "user_priority"-Feld des TCI-Feldes eingetragen. Die Verwendung des "Tag Frame Format" sowie der Aufbau des TCI-Feldes des "Ethernet-encoded tag header" ETPID ist unter Punkt 9.3 des IEEE-Standards 802.1Q-1998 beschrieben.

Durch das erläuterte Mapping unter Ausnutzung des IEEE-Standards 802.1Q-1998 wird sichergestellt, dass jede ATM-Service-Klasse auf eine entsprechende "Ethernet User_Priority" abgebildet werden kann. Für jede ATM-Service-Klasse kann eine separate VLAN-Identifizierung bzw. VLAN User Priority vergeben werden. Nachfolgend ist in Form einer Tabelle ein Vorschlag für eine mögliche Abbildung bzw. für ein mögliches Mapping von ATM-Service-Klassen auf "VLAN User Priority" beschrieben.

| **ATM-Service-Klasse** | **VLAN User Priority** |
|---|---|
| CBR | 6 |
| Real Time-VBR | 5 |
| Non Real Time VBR | 4 |
| UBR | 0 (default) |

Im Rahmen dieses Vorschlags wird sichergestellt, dass ATM-Zellen mit der höchsten Priorität auch im Ethernet EN mit einer hinreichend hohen Priorität übermittelt bzw. behandelt werden. Somit können ATM-Zellen unter Verwendung der "Class-Of-Service"-Eigenschaften mittels Ethernet-Switchen auch über lokal ausgedehnte und gemäß dem Ethernet-Übertragungsverfahren ausgestaltete Kommunikationsnetze übertragen werden.

Die Länge der durch die jeweiligen Frame-Assembling-Instanzen CBR_FA, rt_VBR_FA, nrt_VBR_FA, UBR/UBR+_FA erstellten Ethernet-Datenrahmen dp ergibt sich aus der Art des jeweils zu übermittelnden Datenverkehrs, d.h. aus der jeweiligen Priorität bzw. ATM-Service-Klasse der jeweils eingefügten ATM-Zellen. Wird beispielsweise ein Ethernet-Datenrahmen dp mit darin eingefügten ATM-Zellen gebildet, die Real-Time-Datenverkehr führen (d.h. rt-VBR), darf dieser Ethernet-Datenrahmen nicht beliebig groß werden. Ansonsten würde die Verweildauer der zuerst in den Ethernet-Datenrahmen dp eingefügten ATM-Zelle zu groß werden, so dass sich erhöhte Verzögerungs-Zeiten bzw. Delays ergeben und somit die Echtzeit-Anforderungen nicht mehr erfüllt werden können.

Die Erfüllung von Echtzeit-Anforderungen stellt jedoch einen wesentlichen Aspekt bei der Übertragung von ATM-Zellen über ein gemäß dem Ethernet-Übertragungsverfahren ausgestaltetes Kommunikationsnetz EN dar. Zur Erfüllung dieser Anforderung wurde erfindungsgemäß ein verzögerungszeit-abhängiges Frame-Assembling realisiert. Durch dieses wird sichergestellt, dass bestimmte Verweilzeiten der in die jeweiligen Ethernet-Datenrahmen dp eingefügten ATM-Zellen nicht überschritten werden. Aus der ATM-Übertragungstechnologie ist bekannt, dass im Rahmen eines Aufbaus einer virtuellen ATM-Verbindung neben der jeweiligen ATM-Service-Klasse weitere verbindungsindividuelle Übertragungsparameter durch die beteiligten Instanzen vereinbart bzw. ausgehandelt werden. Ein Beispiel für einen derartigen Übertragungsparameter stellt beispielsweise die ATM-konforme "Cell Delay Variation Tolerance" bzw. CDVT dar. Erfindungsgemäß ist die Länge der durch die jeweiligen Frame-Assembling-Instanzen CBR_FA, rt_VBR_FA, nrt_VBR_FA, UBR/UBR+_FA gebildeten Ethernet-Datenrahmen dp sowohl durch die jeweilige ATM-Service-Klasse als auch durch die jeweils verbindungsindividuellen Übertragungsparameter - hier z.B. durch die verbindungsindividuell festgelegte Cell Delay Variation Tolerance, CDVT - festgelegt. Je kleiner der für eine ATM-Verbindung festgelegte CDVT-Wert ist, desto größer ist die Echtzeitanforderung und um so kürzer muss der jeweils gebildete Ethernet-Datenrahmen dp sein. Werden in einen Ethernet-Datenrahmen dp ATM-Zellen unterschiedlicher virtueller Verbindungen eingefügt - z.B. cell(vc1), cell(vc2) - so ist die Länge des Ethernet-Datenrahmens dp durch den kleinsten vorkommenden CDVT-Wert der jeweils in diesen Datenrahmen einzufügenden ATM-Zellen bestimmt.

Wie aus FIG 5 ersichtlich, ist jeder Frame-Assembling-Instanz CBR_FA, rt_VBR_FA, nrt_VBR_FA, UBR/UBR+_FA ein konfigurierbarer Timer T1...4 zugeordnet, durch welchen die Bildung der jeweiligen Ethernet-Datenrahmen dp gesteuert wird. Jeder Timer T1...4 wird mit dem Einlesen bzw. Einfügen der ersten ATM-Zelle in den jeweiligen Ethernet-Datenrahmen dp gestartet. Mit Hilfe der Timer T1...4 wird die Zeit für Befüllen eines Ethernet-Datenrahmens dp sowie das rechtzeitige Absenden der gebildeten Ethernet-Datenrahmen überwacht. Die durch die einzelnen Timer T1...4 festgelegten Zeiten t1...4 sind dabei abhängig vom jeweils kleinsten CDVT-Wert der jeweils in einen Ethernet-Datenrahmen dp einzufügenden ATM-Zellen. Werden beispielsweise ATM-Zellen der ATM-Service-Klasse CBR mit einem sehr geringen CDVT-Wert übertragen (diese ATM-Zellen gehören beispielsweise einer permanent eingerichteten virtuellen Verbindung mit hohen Echtzeitanforderungen an), so weist dieser Timer - hier z.B. T1 - einen sehr niedrigen Wert t1 auf, d.h. die jeweils einzufügenden ATM-Zellen verweilen nur einen sehr kurzen Zeitraum in der Frame-Assembling-Instanz CBR_FA, so dass durch diese Instanz nur relativ kurze Ethernet-Datenrahmen DP gebildet werden. Im Falle des worst-case wird jeweils nur eine ATM-Zelle pro Ethernet-Datenrahmen übertragen. Es sei angemerkt, dass die maximale Verweilzeit von ATM-Zellen in der jeweiligen Frame-Assembling-Instanz CBR_FA, rt_VBR_FA, nrt_VBR_FA, UBR/UBR+_FA für jede ATM-Service-Klasse separat einstellbar ist. Beispielsweise können gemäß dem Ausführungsbeispiel zwischen den Timern folgende Beziehungen gelten: t1 < t2 < t3 < t4. In FIG 5 ist die aus dieser Beziehung resultierende Länge der jeweils gebildeten Ethernet-Datenrahmen dp jeweils durch ein strichliiertes Rechteck verdeutlicht.

Das Konfigurieren der durch die einzelnen Timer T1...4 festgelegten Zeiten t1...4 kann zum einen durch externes Netz-Management - z.B. beim Einrichten der einzelnen ATM-Verbindungen - erfolgen, als auch zur Laufzeit, so daß auch temporär aufgebaute ATM-Verbindungen - "switched circuit connections" - berücksichtigt werden.

Die durch die einzelnen Frame-Assembling-Instanzen CBR_FA, rt_VBR_FA, nrt_VBR_FA, UBR/UBR+_FA gebildeten und gemäß dem IEEE-Standard 802.3 bzw. 802.1Q-1998 ausgestalteten Ethernet-Datenrahmen dp werden an eine Zugriffseinheit MAC zur Steuerung des Zugriffs auf das Übertragungsmedium - hier das Ethernet-konformes Kommunikationsnetz EN - weitergeleitet. Über die Zugriffseinheit MAC werden die zu übermittelnden Ethernet-Datenrahmen dp über eine interne Schnittstelle xMII an das Ethernet EN weitervermittelt. Die an das Ethernet EN übermittelten Ethernet-Datenrahmen dp werden über dieses an ein durch die im Kopffeld kf des jeweiligen Ethernet-Datenrahmen enthaltenen Ziel-Informationen festgelegtes Ziel - in diesem Ausführungsbeispiel die zentrale Einheit ZE - übermittelt. Die so an das Ziel, d.h. an die zentrale Einheit ZE übermittelten ATM-Zellen cell(vc1), cell(vc2) werden durch die Steuerungsmittel CONT aus dem jeweiligen Ethernet-Datenrahmen extrahiert, wobei die über die erste virtuelle Verbindung vc1 zu übermittelnden Informationen - d.h. der Payload-Anteil der ATM-Zellen cell(vc1) - durch die in der zentralen Einheit ZE angeordnete Steuerungseinheit CONT in bekannter Art und Weise in gemäß dem IEEE Standard 802.3 konforme Informationen, d.h. Ethernet-Datenrahmen umgewandelt und an das erste Kommunikationsnetz KN1 weitervermittelt werden. Die über die zweite virtuelle Verbindung vc2 zu übermittelnden Informationen bzw. ATM-Zellen cell(vc2) werden durch die Steuerungseinheit CONT an das zweite gemäß dem ATM ausgestaltete Kommunikationsnetz KN2 weitervermittelt.

Das erfindungsgemäße Verfahren hat den Vorteil, dass unterschiedliche VPI/VCI-Werte aufweisende, jedoch der gleichen ATM-Service-Klasse zugeordnete ATM-Zellen gemeinsam in einen Ethernet-Datenrahmen eingefügt und transparent über das Ethernet übertragen werden können. Dadurch wird eine Reduzierung des Ethernet-Overhead erreicht, wobei gleichzeitig die für das Mapping der ATM-Zellen im Ethernet-Datenrahmen erforderliche Zeit (Frame Assembling Time) begrenzt wird. Die Anzahl der jeweils in einen Ethernet-Datenrahmen dp einzufügenden ATM-Zellen - d.h. der Füllstand der jeweiligen Payload eines Ethernet-Datenrahmens - wird in erfindungsgemäßer Weise pro Frame-Assembling-Instanz zum einen durch die jeweilige ATM-Service-Klasse als auch durch einen zusätzlichen verbindungsindividuellen Übertragungsparameter - z.B. CDVT-Wert - der jeweils einzufügenden ATM-Zellen gesteuert. Hierbei wird pro Frame-Assembling-Instanz der jeweils kleinste CDTV-Wert der jeweils einzufügenden ATM-Zellen berücksichtigt, so daß die Verzögerung bzw. das Delay der ATM-Zellen beim Einfügen in die jeweiligen Ethernet-Datenrahmen überwacht wird und es nicht zu unnötigen Verzögerungen kommt.

Es sei angemerkt, daß bei der Befüllung der Ethernet-Datenrahmen mit ATM-Zellen weitere verbindungsindividuelle Übertragungsparameter berücksichtigt werden können. Dadurch wird auch bei geringem Verkehrsaufkommen die bei der Übertragung einer ATM-Zelle entstehende Verzögerungszeit auf einen vorher definierten Wert begrenzt, so daß das erfindungsgemäße Verfahren noch genauer auf einzuhaltende Echtzeit-Anforderungen abgestimmt werden kann.

Weiterhin sei angemerkt, daß das in FIG 1 dargestellte zellenorientierte Teilnehmeranschlussnetz ACCESS gemäß einem anderen paketorientierten Übertragungsverfahren ausgestaltet sein kann - z.B. gemäß dem Internet-Protokoll bzw. TCP/IP - so daß mit Hilfe des erfindungsgemäßen Verfahrens anstelle der Datenzellen auch jede beliebige Art von Datenpaketen - gegebenenfalls mit vorheriger Segmentierung bzw. Reassemblierung, "SAR" - in die Datenpakete bzw. Ethernet-Datenrahmen des zweiten Kommunikationsnetzes eingefügt werden können.

## Patentansprüche

1. Verfahren zum Übermitteln von in einem ersten Kommunikationsnetz (ACCESS) zu übertragenden Datenzellen (cell(vc1), cell(vc2)) zumindest teilweise über ein zweites paketorientiertes Kommunikationsnetz (EN),
bei dem im ersten Kommunikationsnetz (ACCESS) mehrere den zu übertragenden Datenzellen (cell(vc1), cell(vc2)) jeweils zuordenbare Prioritäten (CBR, VBR...UBR) vorgesehen sind, wobei die Datenzellen (cell(vc1), cell(vc2)) in Abhängigkeit von den jeweils zugeordneten Prioritäten (CBR, VBR...UBR) über das erste Kommunikationsnetz (ACCESS) übermittelt werden, **dadurch gekennzeichnet,**
- **dass** zumindest eine der zu übermittelnden und die gleiche zugeordnete Priorität (CBR, VBR...UBR) aufweisenden Datenzellen (cell(vcl), cell(vc2)) in ein Nutzdatenfeld (nf) zumindest eines Datenpaketes (dp) des zweiten paketorientierten Kommunikationsnetzes (EN) eingefügt wird,
- **dass** dem zumindest einem Datenpaket (dp) eine von der Priorität (CBR, VBR...UBR) der zumindest einen eingefügten Datenzelle (cell(vc1), cell(vc2)) abgeleitete Übertragungspriorität (user_priority) zugeordnet wird, wobei das zumindest eine Datenpaket (dp) zusammen mit der zumindest einen eingefügten Datenzelle (cell(vc1), cell(vc2)) in Abhängigkeit von der zugeordneten Übertragungspriorität (user_priority) zumindest teilweise an/über das zweite paketorientierte Kommunikationsnetz (EN) übermittelt wird.

2. Verfahren nach Anspruch 1,
**dadurch gekennzeichnet,**
**dass** im ersten und/oder zweiten Kommunikationsnetz (ACCESS, EN) Einfügungsfunktionen (CBR_FA, rt-VBR_FA, nrt-VBR_FA, UBR/UBR+_FA) vorgesehen sind, durch welche für jede im ersten Kommunikationsnetz vorgesehene Priorität (CBR, VBR...UBR) jeweils
- das zumindest eine die entsprechend abgeleitete Übertragungspriorität (user_priority) aufweisende Datenpaket (dp) gebildet,
- die zumindest eine die entsprechende Priorität (CBR, VBR...UBR) aufweisende Datenzelle (cell (vc1), cell(vc2)) in das Nutzdatenfeld (nf) des zumindest einen gebildeten Datenpaketes (dp) eingefügt, und
- das zumindest eine Datenpaket (dp) zumindest teilweise an/über das zweite Kommunikationsnetz (EN) übermittelt wird.

3. Verfahren nach Anspruch 1 oder 2,
**dadurch gekennzeichnet,**
**dass** die über das erste Kommunikationsnetz (ACCESS) zu übertragenden Datenzellen (cell(vc1), cell(vc2)) im Rahmen von über das erste Kommunikationsnetz (ACCESS) eingerichteten, virtuellen Verbindungen (vc1,2) übermittelt werden,
wobei die jeweils zugeordnete Priorität (CBR, VBR...UBR) der jeweils über eine der virtuellen Verbindungen (vc1,2) übermittelten Datenzellen (cell(vc1), cell(vc2)) eine verbindungsindividuelle Priorität repräsentiert.

4. Verfahren nach Anspruch 3,
**dadurch gekennzeichnet,**
**dass** den jeweils über eine der virtuellen Verbindungen (vc1,2) des ersten Kommunikationsnetzes (ACCESS) übermittelten Datenzellen (cell(vc1), cell(vc2)) neben der verbindungsindividuellen Priorität (CBR, VBR...UBR) zumindest ein weiterer verbindungsindividueller Übertragungsparameter zugeordnet ist.

5. Verfahren nach Anspruch 4,
**dadurch gekennzeichnet,**
**dass** die Einfügungsfunktionen (CBR_FA, rt-VBR_FA, nrt-VBR_FA, UBR/UBR+_FA) derart ausgestaltet sind, daß das Einfügen der zumindest einen zu übermittelnden und die gleiche zugeordnete Priorität aufweisenden Datenzelle (cell(vc1), cell(vc2)) in das Nutzdatenfeld (nf) des jeweiligen zumindest einen Datenpaketes (dp) und das Weitervermitteln des zumindest einen Datenpaketes (dp) zumindest teilweise an/über das paketorientierte Kommunikationsnetz (EN) in Abhängigkeit von dem zumindest einen weiteren verbindungsindividuellen Übertragungsparameter der jeweils zumindest einen in das Nutzdatenfeld (nf) eingefügten Datenzelle (cell(vc1), cell(vc2)) erfolgt.

6. Verfahren nach einem der vorherigen Ansprüche,
**dadurch gekennzeichnet,**
**dass** das erste Kommunikationsnetz (ACCESS) gemäß dem asynchronen Transfermodus ausgestaltet ist,
**daß** durch die im ersten Kommunikationsnetz (ACCESS) vorgesehenen Prioritäten (CBR, VBR...UBR) jeweils
- ein gemäß dem ATM-Forum und ITU-T festgelegter Verkehrstyp, oder
- eine bestimmte ATM-Dienstequalität , "ATM Service Class", repräsentiert wird.

7. Verfahren nach Anspruch 6,
**dadurch gekennzeichnet,**
**dass** durch den zumindest einen weiteren zugeordneten verbindungsindividuellen Übertragungsparameter eine jeweils im Rahmen einer eingerichteten ATM-Verbindung festgelegte "Cell Delay Variation Tolerance" repräsentiert wird.

8. Verfahren nach Anspruch 7,
**dadurch gekennzeichnet,**
**dass** die Einfügungsfunktionen (CBR_FA, rt-VBR_FA, nrt-VBR_FA, UBR/UBR+_FA) derart ausgestaltet sind, daß das Einfügen der zumindest einen zu übermittelnden und die gleiche zugeordnete Priorität aufweisenden Datenzelle (cell(vc1), cell(vc2)) in das Nutzdatenfeld (nf) des jeweiligen zumindest einen Datenpaketes (dp) und das Weitervermitteln des zumindest einen Datenpaketes (dp) zumindest teilweise an/über das paketorientierte Kommunikationsnetz (EN) in Abhängigkeit von dem kleinsten festgelegten "Cell Delay Variation Tolerance"-Wert der jeweils zumindest einen in das Nutzdatenfeld (nf) eingefügten Datenzelle (cell(vc1), cell(vc2)) erfolgt.

9. Verfahren nach einem der vorherigen Ansprüche,
**dadurch gekennzeichnet,**
**dass** das zweite paketorientierte Kommunikationsnetz (EN) und die darin übermittelten Datenpakete (dp) gemäß dem IEEE-Standard 802.3 ausgestaltet sind.

10. Verfahren nach Anspruch 9,
**dadurch gekennzeichnet,**
**dass** die über das zweite paketorientierte Kommunikationsnetz (EN) übermittelten Datenpakete gemäß dem IEEE-Standard 802.1Q-1998 ausgestaltet sind, wobei die jeweils dem zumindest einen über das zweite paketorientierte Kommunikationsnetz (EN) übermittelten Datenpaket zugeordnete Übertragungspriorität durch die "user_priority"-information im "Tag Control Information"-Datenfeld (TCI) des "Ethernet-encoded tag header" (ETPID) bestimmt ist.

11. Verfahren nach einem der vorherigen Ansprüche,
**dadurch gekennzeichnet,**
**dass** eine die Anzahl "n" der jeweils in das Nutzdatenfeld (nf) des zumindest einen Datenpaketes (dp) eingefügten Datenzellen (cell(vc1), cell(vc2)) repräsentierende Information in das Datenpaket (dp) eingefügt wird.

12. Verfahren nach einem der vorherigen Ansprüche,
**dadurch gekennzeichnet,**
**dass** jeweils Zielinformationen (DA) in das zumindest eine Datenpaket (dp) eingefügt werden,
**daß** das zumindest eine Datenpaket (dp) und die zumindest eine darin eingefügte Datenzelle (cell(vc1), cell(vc2)) an zumindest ein durch die Zielinformation (DA) des Datenpaketes (dp) repräsentiertes Ziel (ZE) im zweiten paketorientierten Kommunikationsnetz (EN) übermittelt werden.

13. Verfahren nach Anspruch 12,
**dadurch gekennzeichnet,**
**dass** die an das zumindest eine im zweiten paketorientierten Kommunikationsnetz (EN) angeordnete Ziel (ZE) übermittelten Datenzellen (cell(vc1), cell(vc2)) in Abhängigkeit von jeweils in den Datenzellen enthaltenen Routinginformationen (VPI/VCI) weitervermittelt werden.

14. Verfahren nach Anspruch 12,
**dadurch gekennzeichnet,**
**dass** in der zumindest einen an das zumindest eine im zweiten paketorientierten Kommunikationsnetz (EN) angeordnete Ziel (ZE) übermittelten Datenzelle (cell(vc1), cell(vc2)) enthaltene Nutzinformationen in Abhängigkeit von jeweils in den Datenzellen enthaltenen Routinginformationen (VPI/VCI) weitervermittelt werden.

15. Kommunikationsanordnung zum Übermitteln von in einem ersten Kommunikationsnetz (ACCESS) zu übertragenden Datenzellen (cell(vc1), cell(vc2)) zumindest teilweise über ein zweites paketorientiertes Kommunikationsnetz (EN), wobei
- im ersten Kommunikationsnetz (ACCESS) mehrere den zu übertragenden Datenzellen (cell(vc1), cell(vc2)) jeweils zuordenbare Prioritäten (CBR, VBR...UBR) vorgesehen sind,
- die Datenzellen (cell(vc1), cell(vc2)) in Abhängigkeit von den jeweils zugeordneten Prioritäten (CBR, VBR...UBR) über das erste Kommunikationsnetz (ACCESS) übermittelt werden,
**dadurch gekennzeichnet,**
**dass** im ersten und/oder zweiten Kommunikationsnetz (ACCESS, EN) Einfügungsmittel (CBR_FA, rt-VBR_FA, nrt-VBR_FA, UBR/UBR+_FA) vorgesehen sind, durch welche zumindest eine der zu übermittelnden und die gleiche zugeordnete Priorität (CBR, VBR...UBR) aufweisenden Datenzellen (cell (vc1), cell(vc2)) in ein Nutzdatenfeld (nf) zumindest eines Datenpaketes (dp) des zweiten paketorientierten Kommunikationsnetzes (EN) eingefügt wird, und
- **dass** den Einfügungsmitteln (CBR_FA, rt-VBR_FA, nrt-VBR_FA, UBR/UBR+ FA) weitere Zuordnungsmittel zugeordnet sind, durch welche dem zumindest einem Datenpaket (dp) eine von der Priorität (CBR, VBR...UBR) der zumindest einen eingefügten Datenzelle (cell(vc1), cell(vc2)) abgeleitete Übertragungspriorität (user_priority) zugeordnet wird,
- **dass** die Einfügungs- und Zuordnungsmittel (CBR_FA, rt-VBR_FA, nrt-VBR_FA, UBR/UBR+_FA) derart ausgestaltet sind, daß das zumindest eine Datenpaket (dp) zusammen mit der zumindest einen eingefügten Datenzelle (cell(vc1), cell(vc2)) in Abhängigkeit von der zugeordneten Übertragungspriorität (user_priority) zumindest teilweise an/über das zweite paketorientierte Kommunikationsnetz (EN) übermittelt wird.

16. Kommunikationsanordnung nach Anspruch 15,
**dadurch gekennzeichnet,**
**dass** die Einfügungs- und Zuordnungsmittel (CBR_FA, rt-VBR_FA, nrt-VBR_FA, UBR/UBR+_FA) derart ausgestaltet sind, daß für jede im ersten Kommunikationsnetz (ACCESS) vorgesehene Priorität (CBR, VBR...UBR) jeweils
- das zumindest eine die entsprechend abgeleitete Übertragungspriorität (user_priority) aufweisende Datenpaket (dp) gebildet,
- die zumindest eine die entsprechende Priorität (CBR, VBR...UBR) aufweisende Datenzelle (cell (vc1), cell(vc2)) in das Nutzdatenfeld (nf) des zumindest einen gebildeten Datenpaketes (dp) eingefügt, und
- das zumindest eine Datenpaket (dp) zumindest teilweise an/über das zweite Kommunikationsnetz (EN) übermittelt wird.

17. Kommunikationsanordnung nach Anspruch 15 oder 16, **dadurch gekennzeichnet,**
**dass** die Einfügungsmittel (CBR_FA, rt-VBR_FA, nrt-VBR_FA, UBR/UBR+_FA) derart ausgestaltet sind, daß das Einfügen der zumindest einen zu übermittelnden und die gleiche zugeordnete Priorität (CBR, VBR...UBR) aufweisenden Datenzelle (cell(vc1), cell(vc2)) in das Nutzdatenfeld (nf) des jeweiligen zumindest einen Datenpaketes (dp) und das Weitervermitteln des zumindest einen Datenpaketes (dp) zumindest teilweise an/über das paketorientierte Kommunikationsnetz (EN) in Abhängigkeit von zumindest einem weiteren jeweils der zumindest einen in das Nutzdatenfeld (nf) eingefügten Datenzelle (cell(vc1), cell(vc2)) zugeordneten, verbindungsindividuellen Übertragungsparameter erfolgt.

18. Kommunikationseinrichtung (DSLAM), anordenbar in einem ersten zellenorientierten Kommunikationsnetz (ACCESS), zum Übermitteln von in dem ersten Kommunikationsnetz (ACCESS) zu übertragenden Datenzellen (cell(vc1), cell(vc2)) zumindest teilweise über ein in der Kommunikationseinrichtung (DSLAM) angeordnetes zweites paketorientiertes Kommunikationsnetz (EN), wobei
- im ersten Kommunikationsnetz (ACCESS) mehrere den zu übertragenden Datenzellen (cell(vc1), cell(vc2)) jeweils zuordenbare Prioritäten (CBR, VBR...UBR) vorgesehen sind,
- die Datenzellen (cell(vc1), cell(vc2)) in Abhängigkeit von den jeweils zugeordneten Prioritäten (CBR, VBR...UBR) über das erste Kommunikationsnetz (ACCESS) übermittelt werden,
**dadurch gekennzeichnet,**
- **dass** in der Kommunikationseinrichtung (DSLAM) Einfügungsmittel (CBR_FA, rt-VBR_FA, nrt-VBR_FA, UBR/UBR+_FA) vorgesehen sind, durch welche zumindest eine der zu übermittelnden und die gleiche zugeordnete Priorität (CBR, VBR...UBR) aufweisenden Datenzellen (cell(vc1), cell(vc2)) in ein Nutzdatenfeld (nf) zumindest eines Datenpaketes (dp) des zweiten paketorientierten Kommunikationsnetzes (EN) eingefügt wird, und
- **dass** in der Kommunikationseinrichtung (DSLAM) weitere den Einfügungsmitteln (CBR_FA, rt-VBR_FA, nrt-VBR_FA, UBR/UBR+_FA) zugeordnete Zuordnungsmittel angeordnet sind, durch welche dem zumindest einem Datenpaket (dp) eine von der Priorität (CBR, VBR...UBR) der zumindest einen eingefügten Datenzelle (cell(vc1), cell(vc2)) abgeleitete Übertragungspriorität (user_priority) zugeordnet wird,
- **dass** die Einfügungs- und Zuordnungsmittel (CBR_FA, rt-VBR_FA, nrt-VBR_FA, UBR/UBR+_FA) derart ausgestaltet sind, daß das zumindest eine Datenpaket (dp) zusammen mit der zumindest einen eingefügten Datenzelle (cell(vc1), cell(vc2)) in Abhängigkeit von der zugeordneten Übertragungspriorität (user_priority) zumindest teilweise an/über das zweite paketorientierte Kommunikationsnetz (EN) übermittelt wird.

19. Kommunikationseinrichtung nach Anspruch 18,
**dadurch gekennzeichnet,**
**dass** die Einfügungs- und Zuordnungsmittel (CBR_FA, rt-VBR_FA, nrt-VBR_FA, UBR/UBR+_FA) derart ausgestaltet sind, daß für jede im ersten Kommunikationsnetz (ACCESS) vorgesehene Priorität (CBR, VBR...UBR) jeweils
- das zumindest eine die entsprechend abgeleitete Übertragungspriorität (user_priority) aufweisende Datenpaket (dp) gebildet,
- die zumindest eine die entsprechende Priorität (CBR, VBR...UBR) aufweisende Datenzelle (cell(vc1), cell(vc2)) in das Nutzdatenfeld (nf) des zumindest einen gebildeten Datenpaketes (dp) eingefügt, und
- das zumindest eine Datenpaket (dp) zumindest teilweise an/über das zweite Kommunikationsnetz (EN) übermittelt wird.

20. Kommunikationseinrichtung nach Anspruch 18 oder 19,
**dadurch gekennzeichnet,**
**dass** die Einfügungs- und Zuordnungsmittel (CBR_FA, rt-VBR_FA, nrt-VBR_FA, UBR/UBR+_FA) jeweils auf zumindest einer in der Kommunikationseinrichtung (DSLAM) angeordneten und mit dem ersten und zweiten Kommunikationsnetz (ACCESS, EN) verbundenen Anschlusseinheit (AEl...z) und/oder auf zumindest einer zentral in der Kommunikationseinrichtung angeordneten und mit dem ersten und zweiten Kommunikationsnetz (ACCESS, EN) verbundenen zentralen Einheit (ZE) angeordnet sind.

## Claims

1. Method for transmitting data cells (cell(vc1), cell(vc2)) for transmission in a first communication network (ACCESS) at least in part via a second packet-oriented communication network (EN),
in which the first communication network (ACCESS) has multiple priorities (CBR, VBR...UBR) provided in it that are each assignable to the data cells (cell(vc1), cell(vc2)) for transmission, wherein the data cells (cell(vc1), cell(vc2)) are transmitted via the first communication network (ACCESS) on the basis of the respective assigned priorities (CBR, VBR...UBR), **characterized**
- **in that** at least one of the data cells (cell (vc1), cell(vc2)) for transmission that have the same assigned priority (CBR, VBR...UBR) is inserted into a user data field (nf) of at least one data packet (dp) of the second packet-oriented communication network (EN),
- **in that** the at least one data packet (dp) is assigned a transmission priority (user_priority) derived from the priority (CBR, VBR...UBR) of the at least one inserted data cell (cell(vc1), cell(vc2)), wherein the at least one data packet (dp) is transmitted at least in part to/via the second packet-oriented communication network (EN) together with the at least one inserted data cell (cell(vc1), cell(vc2)) on the basis of the assigned transmission priority (user_priority).

2. Method according to Claim 1,
**characterized**
**in that** the first and/or second communication network (ACCESS, EN) has/have insertion functions (CBR_FA, rt-VBR_FA, nrt-VBR_FA, UBR/UBR+_FA) provided in it/them by means of which, for each priority (CBR, VBR...UBR) provided in the first communication network, in each case
- the at least one data packet (dp) having the accordingly derived transmission priority (user_priority) is formed,
- the at least one data cell (cell(vc1), cell(vc2)) having the corresponding priority (CBR, VBR...UBR) is inserted into the user data field (nf) of the at least one formed data packet (dp), and
- the at least one data packet (dp) is transmitted at least in part to/via the second communication network (EN).

3. Method according to Claim 1 or 2,
**characterized**
**in that** the data cells (cell(vc1), cell(vc2)) for transmission via the first communication network (ACCESS) are transmitted within the framework of virtual connections (vc1,2) set up via the first communication network (ACCESS),
wherein the respective assigned priority (CBR, VBR...UBR) of the data cells (cell(vc1), cell(vc2)) that are each transmitted via one of the virtual connections (vc1,2) represents a connection-individual priority.

4. Method according to Claim 3,
**characterized**
**in that** the data cells (cell(vc1), cell(vc2)) that are each transmitted via the virtual connections (vc1,2) of the first communication network (ACCESS) have not only the connection-individual priority (CBR, VBR...UBR) but also at least one further connection-individual transmission parameter assigned to them.

5. Method according to Claim 4,
**characterized**
**in that** the insertion functions (CBR_FA, rt-VBR_FA, nrt-VBR_FA, UBR/UBR+_FA) are configured such that the insertion of the at least one data cell (cell(vc1), cell(vc2)) for transmission having the same assigned priority into the user data field (nf) of the respective at least one data packet (dp) and the propagation of the at least one data packet (dp) at least in part to/via the packet-oriented communication network (EN) are effected on the basis of the at least one further connection-individual transmission parameter of the respective at least one data cell (cell(vc1), cell(vc2)) inserted into the user data field (nf).

6. Method according to one of the preceding claims,
**characterized**
**in that** the first communication network (ACCESS) is configured according to the asynchronous transfer mode, in that the priorities (CBR, VBR...UBR) provided in the first communication network (ACCESS) each represent
- a traffic type stipulated according to the ATM forum and ITU-T, or
- a particular ATM quality of service, "ATM Service Class".

7. Method according to Claim 6,
**characterized**
**in that** the at least one further assigned connection-individual transmission parameter represents a respective "Cell Delay Variation Tolerance" stipulated within the framework of an ATM connection that has been set up.

8. Method according to Claim 7,
**characterized**
**in that** the insertion functions (CBR_FA, rt-VBR_FA, nrt-VBR_FA, UBR/UBR+_FA) are configured such that the insertion of the at least one data cell (cell(vc1), cell(vc2)) for transmission having the same assigned priority into the user data field (nf) of the respective at least one data packet (dp) and the propagation of the at least one data packet (dp) at least in part to/via the packet-oriented communication network (EN) are effected on the basis of the smallest stipulated "Cell Delay Variation Tolerance" value of the respective at least one data cell (cell(vc1), cell(vc2)) inserted into the user data field (nf).

9. Method according to one of the preceding claims,
**characterized**
**in that** the second packet-oriented communication network (EN) and the data packets (dp) transmitted therein are configured according to IEEE standard 802.3.

10. Method according to Claim 9,
**characterized**
**in that** the data packets transmitted via the second packet-oriented communication network (EN) are configured according to IEEE standard 802.1Q-1998, wherein the respective transmission priority assigned to the at least one data packet transmitted via the second packet-oriented communication network (EN) is determined by the "user_priority" information in the "Tag Control Information" data field (TCI) of the "Ethernet-encoded tag header" (ETPID).

11. Method according to one of the preceding claims,
**characterized**
**in that** a piece of information representing the number "n" of data cells (cell(vc1), cell(vc2)) that are each inserted into the user data field (nf) of the at least one data packet (dp) is inserted into the data packet (dp).

12. Method according to one of the preceding claims, **characterized**
**in that** respective pieces of destination information (DA) are inserted into the at least one data packet (dp),
**in that** the at least one data packet (dp) and the at least one data cell (cell(vc1), cell(vc2)) inserted therein are transmitted to at least one destination (ZE), represented by the piece of destination information (DA) of the data packet (dp), in the second packet-oriented communication network (EN).

13. Method according to Claim 12,
**characterized**
**in that** the data cells (cell(vc1), cell(vc2)) transmitted to the at least one destination (ZE) arranged in the second packet-oriented communication network (EN) are propagated on the basis of pieces of routing information (VPI/VCI) that are each contained in the data cells.

14. Method according to Claim 12,
**characterized**
**in that** pieces of user information contained in the at least one data cell (cell(vc1), cell(vc2)) transmitted to the at least one destination (ZE) arranged in the second packet-oriented communication network (EN) are propagated on the basis of pieces of routing information (VPI/VCI) that are each contained in the data cells.

15. Communication arrangement for transmitting data cells (cell(vc1), cell(vc2)) for transmission in a first communication network (ACCESS) at least in part via a second packet-oriented communication network (EN), wherein
- the first communication network (ACCESS) has multiple priorities (CBR, VBR...UBR) provided in it that are each assignable to the data cells (cell(vc1), cell(vc2)) for transmission,
- the data cells (cell(vc1), cell(vc2)) are transmitted via the first communication network (ACCESS) on the basis of the respective assigned priorities (CBR, VBR...UBR),
**characterized**
**in that** the first and/or second communication network (ACCESS, EN) has/have insertion means (CBR_FA, rt-VBR_FA, nrt-VBR_FA, UBR/UBR+_FA) provided in it/them that insert at least one of the data cells (cell(vc1), cell(vc2)) for transmission that have the same assigned priority (CBR, VBR...UBR) into a user data field (nf) of at least one data packet (dp) of the second packet-oriented communication network (EN), and
- **in that** the insertion means (CBR_FA, rt-VBR_FA, nrt-VBR_FA, UBR/UBR+_FA) have further assignment means assigned to them that assign to the at least one data packet (dp) a transmission priority (user_priority) derived from the priority (CBR, VBR...UBR) of the at least one inserted data cell (cell(vc1), cell(vc2)),
- **in that** the insertion and assignment means (CBR_FA, rt-VBR_FA, nrt-VBR_FA, UBR/UBR+_FA) are configured such that the at least one data packet (dp) is transmitted at least in part to/via the second packet-oriented communication network (EN) together with the at least one inserted data cell (cell(vc1), cell(vc2)) on the basis of the assigned transmission priority (user_priority).

16. Communication arrangement according to Claim 15,
**characterized**
**in that** the insertion and assignment means (CBR_FA, rt-VBR_FA, nrt-VBR_FA, UBR/UBR+_FA) are configured such that, for each priority (CBR, VBR...UBR) provided in the first communication network (ACCESS), in each case
- the at least one data packet (dp) having the accordingly derived transmission priority (user_priority) is formed,
- the at least one data cell (cell(vc1), cell(vc2)) having the corresponding priority (CBR, VBR...UBR) is inserted into the user data field (nf) of the at least one formed data packet (dp), and
- the at least one data packet (dp) is transmitted at least in part to/via the second communication network (EN).

17. Communication arrangement according to Claim 15 or 16,
**characterized**
**in that** the insertion means (CBR_FA, rt-VBR_FA, nrt-VBR_FA, UBR/UBR+_FA) are configured such that the insertion of the at least one data cell (cell(vc1), cell(vc2)) for transmission having the same assigned priority (CBR, VBR...UBR) into the user data field (nf) of the respective at least one data packet (dp) and the propagation of the at least one data packet (dp) at least in part to/via the packet-oriented communication network (EN) are effected on the basis of at least one further connection-individual transmission parameter assigned in each case to the at least one data cell (cell(vc1), cell(vc2)) inserted into the user data field (nf).

18. Communication device (DSLAM), arrangeable in a first cell-oriented communication network (ACCESS) for transmitting data cells (cell(vc1), cell(vc2)) for transmission in the first communication network (ACCESS) at least in part via a second packet-oriented communication network (EN) arranged in the communication device (DSLAM), wherein
- the first communication network (ACCESS) has multiple priorities (CBR, VBR...UBR) provided in it that are each assignable to the data cells (cell(vc1), cell(vc2)) for transmission,
- the data cells (cell(vc1), cell(vc2)) are transmitted via the first communication network (ACCESS) on the basis of the respective assigned priorities (CBR, VBR...UBR),
**characterized**
- **in that** the communication device (DSLAM) has insertion means (CBR_FA, rt-VBR_FA, nrt-VBR_FA, UBR/UBR+_FA) provided in it that insert at least one of the data cells (cell(vc1), cell(vc2)) for transmission that have the same assigned priority (CBR, VBR...UBR) into a user data field (nf) of at least one data packet (dp) of the second packet-oriented communication network (EN), and
- **in that** the communication device (DSLAM) has further assignment means, assigned to the insertion means (CBR_FA, rt-VBR_FA, nrt-VBR_FA, UBR/UBR+_FA), arranged in it that assign to the at least one data packet (dp) a transmission priority (user_priority) derived from the priority (CBR, VBR...UBR) of the at least one inserted data cell (cell(vc1), cell(vc2)),
- **in that** the insertion and assignment means (CBR_FA, rt-VBR_FA, nrt-VBR_FA, UBR/UBR+_FA) are configured such that the at least one data packet (dp) is transmitted at least in part to/via the second packet-oriented communication network (EN) together with the at least one inserted data cell (cell(vc1), cell(vc2)) on the basis of the assigned transmission priority (user_priority).

19. Communication device according to Claim 18,
**characterized**
**in that** the insertion and assignment means (CBR_FA, rt-VBR_FA, nrt-VBR_FA, UBR/UBR+_FA) are configured such that, for each priority (CBR, VBR...UBR) provided in the first communication network (ACCESS), in each case
- the at least one data packet (dp) having the accordingly derived transmission priority (user_priority) is formed,
- the at least one data cell (cell(vc1), cell(vc2)) having the corresponding priority (CBR, VBR...UBR) is inserted into the user data field (nf) of the at least one formed data packet (dp), and
- the at least one data packet (dp) is transmitted at least in part to/via the second communication network (EN).

20. Communication device according to Claim 18 or 19,
**characterized**
**in that** the insertion and assignment means (CBR_FA, rt-VBR_FA, nrt-VBR_FA, UBR/UBR+_FA) are each arranged on at least one connection unit (AE1...z), which is arranged in the communication device (DSLAM) and connected to the first and second communication networks (ACCESS, EN), and/or on at least one central unit (ZE), which is arranged centrally in the communication device and connected to the first and second communication networks (ACCESS, EN).

## Revendications

1. Procédé pour communiquer au moins partiellement par le biais d'un deuxième réseau de communication en mode paquets (EN) des cellules de données (cell(vc1), cell(vc2)) à transmettre dans un premier réseau de communication (ACCESS),
avec lequel plusieurs priorités (CBR, VBR...UBR) pouvant respectivement être attribuées aux cellules de données (cell(vc1), cell(vc2)) à transmettre sont prévues dans le premier réseau de communication (ACCESS), les cellules de données (cell(vc1), cell(vc2)) étant communiquées par le biais du premier réseau de communication (ACCESS) en fonction des priorités (CBR, VBR...UBR) respectivement attribuées,
**caractérisé en ce**
- **qu'**au moins l'une des cellules de données (cell(vc1), cell(vc2)) à transmettre et présentant la même priorité (CBR, VBR...UBR) attribuée est insérée dans un champ de données utiles (nf) d'au moins un paquet de données (dp) du deuxième réseau de communication en mode paquets (EN),
- **qu'**une priorité de transmission (user_priority) dérivée de la priorité (CBR, VBR...UBR) de l'au moins une cellule de données (cell(vc1), cell(vc2)) insérée est attribuée à l'au moins un paquet de données (dp), l'au moins un paquet de données (dp) étant communiqué au moins partiellement au/par le biais du deuxième réseau de communication en mode paquets (EN) conjointement avec l'au moins une cellule de données (cell(vc1), cell(vc2)) insérée en fonction de la priorité de transmission (user_priority) attribuée.

2. Procédé selon la revendication 1, **caractérisé en ce que** des fonctions d'insertion (CBR_FA, rt-VBR_FA, nrt-VBR_FA, UBR/UBR+_FA) sont prévues dans le premier et/ou le deuxième réseau de communication (ACCESS, EN), par le biais desquelles, respectivement pour chaque priorité (CBR, VBR...UBR) prévue dans le premier réseau de communication:
- l'au moins un paquet de données (dp) qui présente la priorité de transmission (user_priority) dérivée de manière correspondante est formé,
- l'au moins une cellule de données (cell(vc1), cell(vc2)) qui présente la priorité (CBR, VBR...UBR) correspondante est insérée dans le champ de données utiles (nf) de l'au moins un paquet de données (dp) formé, et
- l'au moins un paquet de données (dp) est communiqué au moins partiellement au/par le biais du deuxième réseau de communication (EN).

3. Procédé selon la revendication 1 ou 2, **caractérisé en ce que** les cellules de données (cell(vc1), cell(vc2)) à transmettre par le biais du premier réseau de communication (ACCESS) sont communiquées dans le cadre de liaisons virtuelles (vc1, 2) établies par le biais du premier réseau de communication (ACCESS), la priorité (CBR, VBR...UBR) respectivement attribuée aux cellules de données (cell(vc1), cell(vc2)) respectivement communiquées par le biais de l'une des liaisons virtuelles (vc1, 2) représentant une priorité individuelle à la liaison.

4. Procédé selon la revendication 3, **caractérisé en ce qu'**en plus de la priorité (CBR, VBR...UBR) individuelle de la liaison, au moins un paramètre de transmission individuel à la liaison supplémentaire est attribué aux cellules de données (cell(vc1), cell(vc2)) respectivement communiquées par le biais de l'une des liaisons virtuelles (vc1, 2) du premier réseau de communication (ACCESS).

5. Procédé selon la revendication 4, **caractérisé en ce que** les fonctions d'insertion (CBR_FA, rt-VBR_FA, nrt-VBR_FA, UBR/UBR+_FA) sont configurées de telle sorte que l'insertion de l'au moins une cellule de données (cell(vc1), cell(vc2)) à communiquer et présentant la même priorité attribuée dans le champ de données utiles (nf) de l'au moins un paquet de données (dp) respectif et la retransmission de l'au moins un paquet de données (dp) au moins partiellement au/par le biais du réseau de communication en mode paquets (EN) s'effectue en fonction de l'au moins un paramètre de transmission individuel à la liaison supplémentaire de l'au moins une cellule de données (cell(vc1), cell(vc2)) respective insérée dans le champ de données utiles (nf).

6. Procédé selon l'une des revendications précédentes, **caractérisé en ce**
**que** le premier réseau de communication (ACCESS) est configuré selon le mode de transfert asynchrone,
**que** les priorités (CBR, VBR...UBR) prévues dans le premier réseau de communication (ACCESS) représentent à chaque fois
- un type de trafic défini selon le forum ATM et l'UIT-T, ou
- une qualité de service ATM « ATM Service Class » définie.

7. Procédé selon la revendication 6, **caractérisé en ce qu'**une « tolérance de variation du retard de cellule », respectivement définie dans le cadre d'une liaison ATM établie, est représentée par l'au moins un paramètre de transmission individuel à la liaison attribué supplémentaire.

8. Procédé selon la revendication 7, **caractérisé en ce que** les fonctions d'insertion (CBR_FA, rt-VBR_FA, nrt-VBR_FA, UBR/UBR+_FA) sont configurées de telle sorte que l'insertion de l'au moins une cellule de données (cell(vc1), cell(vc2)) à communiquer et présentant la même priorité attribuée dans le champ de données utiles (nf) de l'au moins un paquet de données (dp) respectif et la retransmission de l'au moins un paquet de données (dp) au moins partiellement au/par le biais du réseau de communication en mode paquets (EN) s'effectue en fonction de la plus petite valeur déterminée de la « tolérance de variation du retard de cellule » de l'au moins une cellule de données (cell(vc1), cell(vc2)) respective insérée dans le champ de données utiles (nf).

9. Procédé selon l'une des revendications précédentes, **caractérisé en ce que** le deuxième réseau de communication en mode paquets (EN) et les paquets de données (dp) qui sont communiqués dans celui-ci sont configurés selon la norme IEEE 802.3.

10. Procédé selon la revendication 9, **caractérisé en ce que** les paquets de données qui sont communiqués par le biais du deuxième réseau de communication en mode paquets (EN) sont configurés selon la norme IEEE 802.1Q-1998, la priorité de transmission respectivement attribuée à l'au moins un paquet de données communiqué par le biais du deuxième réseau de communication en mode paquets (EN) étant définie par l'information « user_priority » dans le champ de données « Tag Control Information » (TCI - Information de commande de balise) de l'en-tête de balise codé Ethernet (ETPID).

11. Procédé selon l'une des revendications précédentes, **caractérisé en ce qu'**une information représentant le nombre « n » de cellules de données (cell(vc1), cell(vc2)) respectivement insérées dans le champ de données utiles (nf) de l'au moins un paquet de données (dp) est insérée dans le paquet de données (dp).

12. Procédé selon l'une des revendications précédentes, **caractérisé en ce**
**que** des informations de destination (DA) respectives sont insérées dans l'au moins un paquet de données (dp),
**que** l'au moins un paquet de données (dp) et l'au moins une cellule de données (cell(vc1), cell(vc2)) qui y est insérée sont communiquées à au moins une destination (ZE) représentée par l'information de destination (DA) du paquet de données (dp) dans le deuxième réseau de communication en mode paquets (EN).

13. Procédé selon la revendication 12, **caractérisé en ce que** les cellules de données (cell(vc1), cell(vc2)) communiquées à l'au moins une destination (ZE) disposée dans le deuxième réseau de communication en mode paquets (EN) sont retransmises en fonction d'informations de routage (VPI/VCI) respectivement contenues dans les cellules de données.

14. Procédé selon la revendication 12, **caractérisé en ce que** des informations utiles contenues dans l'au moins une cellule de données (cell(vc1), cell(vc2)) communiquée à l'au moins une destination (ZE) disposée dans le deuxième réseau de communication en mode paquets (EN) sont retransmises en fonction des informations de routage (VPI/VCI) respectivement contenues dans les cellules de données.

15. Arrangement de communication pour communiquer au moins partiellement par le biais d'un deuxième réseau de communication en mode paquets (EN) des cellules de données (cell(vc1), cell(vc2)) à transmettre dans un premier réseau de communication (ACCESS),
- plusieurs priorités (CBR, VBR...UBR) pouvant respectivement être attribuées aux cellules de données (cell(vc1), cell(vc2)) à transmettre étant prévues dans le premier réseau de communication (ACCESS),
- les cellules de données (cell(vc1), cell(vc2)) étant communiquées par le biais du premier réseau de communication (ACCESS) en fonction des priorités (CBR, VBR...UBR) respectivement attribuées,
**caractérisé en ce**
- **que** des moyens d'insertion (CBR_FA, rt-VBR_FA, nrt-VBR_FA, UBR/UBR+_FA) sont prévus dans le premier et/ou le deuxième réseau de communication (ACCESS, EN), par le biais desquels au moins l'une des cellules de données (cell(vc1), cell(vc2)) à communiquer et présentant la même priorité (CBR, VBR...UBR) attribuée est insérée dans un champ de données utiles (nf) d'au moins un paquet de données (dp) du deuxième réseau de communication en mode paquets (EN), et
- **que** des moyens d'attribution supplémentaires sont associés aux moyens d'insertion (CBR_FA, rt-VBR_FA, nrt-VBR_FA, UBR/UBR+_FA), par le biais desquels une priorité de transmission (user_priority) dérivée de la priorité (CBR, VBR...UBR) de l'au moins une cellule de données (cell(vc1), cell(vc2)) insérée est attribuée à l'au moins un paquet de données (dp),
- **que** les moyens d'insertion et d'attribution (CBR_FA, rt-VBR_FA, nrt-VBR_FA, UBR/UBR+_FA) sont configurés de telle sorte que l'au moins un paquet de données (dp) est communiqué au moins partiellement au/par le biais du deuxième réseau de communication en mode paquets (EN) conjointement avec l'au moins une cellule de données (cell(vc1), cell(vc2)) insérée en fonction de la priorité de transmission (user_priority) attribuée.

16. Arrangement de communication selon la revendication 15, **caractérisé en ce**
**que** les moyens d'insertion et d'attribution (CBR_FA, rt-VBR_FA, nrt-VBR_FA, UBR/UBR+_FA) sont configurés de telle sorte que, respectivement pour chaque priorité (CBR, VBR...UBR) prévue dans le premier réseau de communication (ACCESS) :
- l'au moins un paquet de données (dp) qui présente la priorité de transmission (user_priority) dérivée correspondante est formé,
- l'au moins une cellule de données (cell(vc1), cell(vc2)) qui présente la priorité (CBR, VBR...UBR) correspondante est insérée dans le champ de données utiles (nf) de l'au moins un paquet de données (dp) formé, et
- l'au moins un paquet de données (dp) est communiqué au moins partiellement au/par le biais du deuxième réseau de communication en mode paquets (EN).

17. Arrangement de communication selon la revendication 15 ou 16, **caractérisé en ce que** les moyens d'insertion (CBR_FA, rt-VBR_FA, nrt-VBR_FA, UBR/UBR+_FA) sont configurés de telle sorte que l'insertion de l'au moins une cellule de données (cell(vc1), cell(vc2)) à communiquer et qui présente la même priorité (CBR, VBR...UBR) attribuée dans le champ de données utiles (nf) de l'au moins un paquet de données (dp) respectif et la retransmission de l'au moins un paquet de données (dp) au moins partiellement au/par le biais du réseau de communication en mode paquets (EN) s'effectue en fonction d'au moins un paramètre de transmission individuel à la liaison supplémentaire respectivement attribué à la cellule de données (cell(vc1), cell(vc2)) insérée dans le champ de données utiles (nf).

18. Dispositif de communication (DSLAM), pouvant être disposé dans un premier réseau de communication en mode cellules (ACCESS) pour communiquer au moins partiellement par le biais d'un deuxième réseau de communication en mode paquets (EN) disposé dans le dispositif de communication (DSLAM) des cellules de données (cell(vc1), cell(vc2)) à transmettre dans le premier réseau de communication (ACCESS),
- plusieurs priorités (CBR, VBR...UBR) pouvant respectivement être attribuées aux cellules de données (cell(vc1), cell(vc2)) à transmettre étant prévues dans le premier réseau de communication (ACCESS),
- les cellules de données (cell(vc1), cell(vc2)) étant communiquées par le biais du premier réseau de communication (ACCESS) en fonction des priorités (CBR, VBR...UBR) respectivement attribuées,
**caractérisé en ce**
- **que** des moyens d'insertion (CBR_FA, rt-VBR_FA, nrt-VBR_FA, UBR/UBR+_FA) sont prévus dans le dispositif de communication (DSLAM), par le biais desquels au moins l'une des cellules de données (cell(vc1), cell(vc2)) à communiquer et présentant la même priorité (CBR, VBR...UBR) attribuée est insérée dans un champ de données utiles (nf) d'au moins un paquet de données (dp) du deuxième réseau de communication en mode paquets (EN), et
- **que** des moyens d'attribution supplémentaires associés aux moyens d'insertion (CBR_FA, rt-VBR_FA, nrt-VBR_FA, UBR/UBR+_FA) se trouvent dans le dispositif de communication (DSLAM), par le biais desquels une priorité de transmission (user_priority) dérivée de la priorité (CBR, VBR...UBR) de l'au moins une cellule de données (cell(vc1), cell(vc2)) insérée est attribuée à l'au moins un paquet de données (dp),
- **que** les moyens d'insertion et d'attribution (CBR_FA, rt-VBR_FA, nrt-VBR_FA, UBR/UBR+_FA) sont configurés de telle sorte que l'au moins un paquet de données (dp) est communiqué au moins partiellement au/par le biais du deuxième réseau de communication en mode paquets (EN) conjointement avec l'au moins une cellule de données (cell(vc1), cell(vc2)) insérée en fonction de la priorité de transmission (user_priority) attribuée.

19. Dispositif de communication selon la revendication 18, **caractérisé en ce**
**que** les moyens d'insertion et d'attribution (CBR_FA, rt-VBR_FA, nrt-VBR_FA, UBR/UBR+_FA) sont configurés de telle sorte que, respectivement pour chaque priorité (CBR, VBR...UBR) prévue dans le premier réseau de communication (ACCESS) :
- l'au moins un paquet de données (dp) qui présente la priorité de transmission (user_priority) dérivée correspondante est formé,
- l'au moins une cellule de données (cell(vc1), cell(vc2)) qui présente la priorité (CBR, VBR...UBR) correspondante est insérée dans le champ de données utiles (nf) de l'au moins un paquet de données (dp) formé, et
- l'au moins un paquet de données (dp) est communiqué au moins partiellement au/par le biais du deuxième réseau de communication (EN).

20. Dispositif de communication selon la revendication 18 ou 19, **caractérisé en ce que** les moyens d'insertion et d'attribution (CBR_FA, rt-VBR_FA, nrt-VBR_FA, UBR/UBR+_FA) sont respectivement disposés sur au moins une unité de connexion (AE1...z) disposée dans le dispositif de communication (DSLAM) et reliée au premier et au deuxième réseau de communication (ACCESS, EN) et/ou sur au moins une unité centrale (ZE) disposée de manière centralisée dans le dispositif de communication et reliée au premier et au deuxième réseau de communication (ACCESS, EN).
